# EUROPÄISCHE PATENTSCHRIFT

(11) **EP 0 997 690 B1**
(45) Veröffentlichungstag und Bekanntmachung des Hinweises auf die Patenterteilung: **04.08.2004**
(21) Anmeldenummer: 99120601.2
(22) Anmeldetag: 16.10.1999
(51) Int. Cl.: F24D 17/00, F16L 37/088, F16L 39/00

(54) **Rohrsystem für flüssige Medien, insbesondere für in gebäuden verlegte Warmwasserkreise zur Brauchwasserversorgung**
Pipe system for liquids, esp. for sanitary hot water circuits in buildings
Système de tuyaux, en particulier pour circuits d'eau chaude sanitaire dans des bâtiments

(30) Priorität: 27.10.1998 DE 19849362
(43) Veröffentlichungstag der Anmeldung: 03.05.2000
(73) Patentinhaber: Gebr. Kemper GmbH + Co. KG, 57462 Olpe (DE)
(72) Erfinder: Hilchenbach, Gerd, 57462 Olpe (DE)
(74) Vertreter: Pürckhauer, Rolf, Dipl.-Ing.

(56) Entgegenhaltungen:
- CH-A- 432 952
- DE-A- 3 542 374
- DE-A- 19 603 398
- DE-A- 19 820 501
- DE-U- 29 509 041
- US-A- 4 732 414
- US-A- 4 886 305
- US-A- 5 746 454

## Beschreibung

Die Erfindung betrifft ein Rohrsystem für flüssige Medien, insbesondere für in Gebäuden verlegte Warmwasserkreise zur Brauchwasserversorgung, mit einem Warmwassererzeuger, einer von diesem zu Zapfstellen führenden Zuleitung, einer von dieser abzweigenden, zum Warmwassererzeuger zurückführenden Zirkulationsleitung sowie einer das warme Wasser im Kreislauf umpumpenden Wasserpumpe, wobei das Rohrsystem Innen- und Außenrohre, Rohrmuffen zum koaxialen Fixieren der Innenrohre in den Außenrohren sowie Fittings zum Verbinden von mindestens zwei jeweils aus einem Innen- und einem Außenrohr bestehenden Doppelrohren umfaßt.

Die US-A-4 732 414 beschreibt ein Rohrsystem dieser Art mit Doppelrohren, deren Außenrohre an den Enden mit Rohrmuffen zum Fixieren der Innenrohre bestückt sind. Die Doppelrohre werden mittels Verbindungsmuffen zusammengebaut, die nach Art einer Überwurfmutter mit einer an ihrem einen Ende angeformten Ringschulter an einem entsprechenden Bund der Rohrmuffe des einen Doppelrohres angreifen und mit ihrem anderen Ende, das ein Innengewinde aufweist, auf die mit einem entsprechenden Außengewinde versehene Rohrmuffe des anderen Doppelrohres aufgeschraubt werden. Zur Abdichtung der Innen- und Außenrohre der Doppelrohre werden Dichtringe verwendet, die mit Hilfe der Verbindungsmuffen zwischen den Enden von jeweils zwei angrenzenden Innen- und Außenrohren zweier Doppelrohre eingespannt werden.

Die Verlegung der Doppelrohre dieses bekannten Rohrsystems ist umständlich sowie zeit- und kostenaufwendig. Ferner können mit fortschreitender Betriebsdauer Dichtungsprobleme auftreten.

Der Erfindung liegt die Aufgabe zugrunde, ein Doppelrohrsystem für flüssige Medien, insbesondere für die Warmwasserversorgung von Gebäuden zu entwickeln, das eine einfache und kostengünstige Verlegung von Rohrleitungen ermöglicht.

Diese Aufgabe ist erfindungsgemäß gelöst durch ein Rohrsystem mit den Merkmalen des Patentanspruchs 1.

Die Unteransprüche beinhalten vorteilhafte und zweckmäßige Weiterbildungen der Erfindung.

Das erfindungsgemäße Rohrsystem mit Doppelrohren, die durch ein Außenrohr und ein zu diesem koaxial angeordnetes Innenrohr gebildet und in einem Rohrstrang verlegt werden, erübrigt bei der Installation einer Warmwasserversorgungsanlage in Gebäuden durch die Nutzung der Außenrohre als Zuleitung für das warme Wasser zu den einzelnen Zapfstellen und durch die Verwendung der Innenrohre als Zirkulationsleitung die gesonderte Verlegung einer Zirkulationsleitung und erspart damit Material- und Arbeitskosten. Kleinere Undichtigkeiten in der Zirkulationsleitung sind nicht nachteilig, da das Leckwasser in der Zuleitung für das warme Wasser aufgefangen wird. Armaturen wie Regulierventile können auf einfache Weise in die Fittings des Rohrsystems eingesetzt werden. Außen- und Innenrohre können mittels Rohrmuffen und Fittings bei geringstem Arbeitsaufwand mittels Steckverbindungen zu einem Rohrstrang unlösbar verbunden werden.

Das erfindungsgemäße Rohrsystem mit den zugehörigen Bauelementen ist nachstehend anhand von Zeichnungsfiguren erläutert, die folgendes darstellen:
- Fig. 1: das Schema eines herkömmlichen Warmwasserkreislaufes für die Warmwasserversorgung von Gebäuden,
- Fig. 2: einen Längsschnitt einer Rohrmuffe zur Verbindung eines Außen- und eines Innenrohres eines Doppelrohres mit einem Fitting,
- Fig. 3: einen Längsschnitt zweier rechtwinklig verlegter Doppelrohre, die durch ein als Bogenstück ausgebildetes Fitting und Rohrmuffen miteinander verbunden sind,
- Fig. 4: einen Längsschnitt eines als T-Stück ausgebildeten Fittings, an das mittels Rohrmuffen drei Doppelrohre zur Bildung einer Rohrabzweigung angeschlossen sind, und
- Fig. 5: einen Längsschnitt eines als T-Stück ausgebildeten Fittings mit einer eingesetzten Armatur und Rohrmuffen zur Verbindung zweier Doppelrohre.

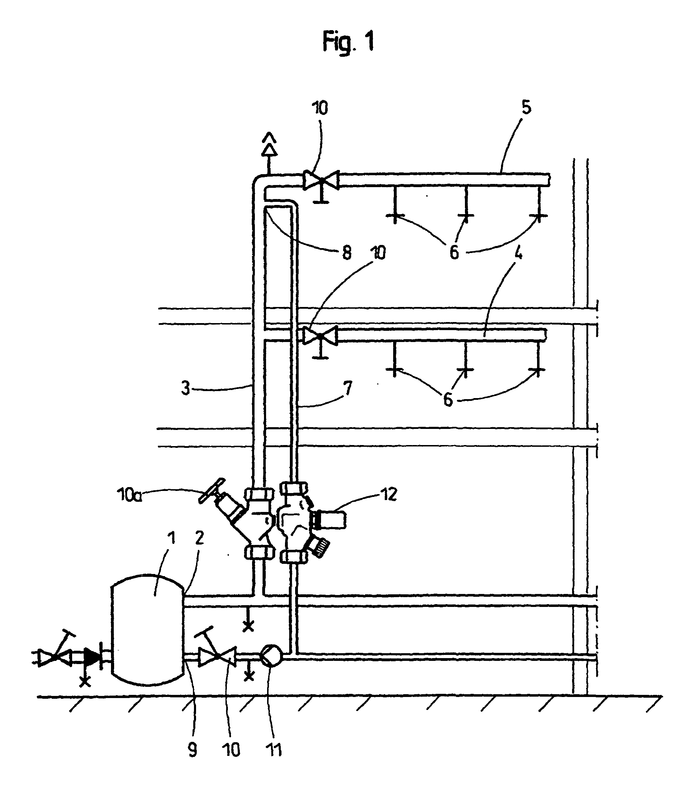

Fig. 1 zeigt das Schema eines herkömmlichen Warmwasserleitungssystems mit einem Heizkessel 1, einer an den Vorlaufanschluß 2 des Warmwasserboilers des Heizkessels 1 angeschlossenen Warmwasser-zuleitung 3, an die über Abzweigleitungen 4, 5 verschiedene Zapfstellen 6 angeschlossen sind, einer parallel zur Zuleitung 3 verlegten Zirkulationsleitung 7, die über eine Rohrabzweigung 8 mit der Warmwasser-Zuleitung 3 und mit dem Rücklaufanschluß 9 des Warmwasserboilers des Heizkessels 1 verbunden ist, einem Absperrventil 10a mit integriertem Rückflußverhinderer in der Zuleitung 3, einer in die Zirkulationsleitung 7 eingebauten Umwälzpumpe 11, einem dieser vorgeschalteten Regulierventil 12 sowie in die Abzweigleitungen 4, 5 vor den Zapfstellen 6 und in die Zirkulationsleitung 7 zwischen Umwälzpumpe 11 und dem Warmwasserboiler des Heizkessels 1 eingebauten Absperrventilen 10. Durch die Umwälzpumpe 11 wird das warme Wasser im Dauerbetrieb durch den von dem Warmwasserboiler des Heizkessels 1, die Warmwasser-Zuleitung 3 und die Zirkulationsleitung 7 gebildeten Kreislauf umgepumpt, dem über die verschiedenen Zapfstellen 6 nach Bedarf warmes Wasser entnommen werden kann. Durch das Umpumpen des warmen Wassers im Kreislauf steht an den Zapfstellen 6 ständig warmes Wasser zur Verfügung.

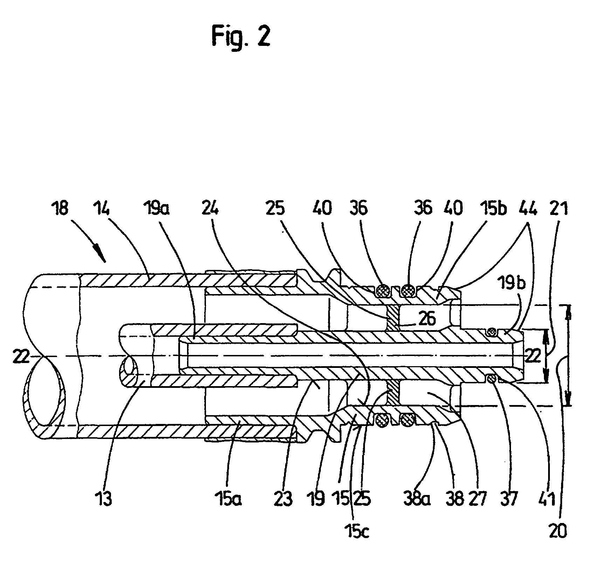

Das in den Fign. 2 bis 5 dargestellte Rohrsystem für ein flüssiges Medium umfaßt Innen- und Außenrohre 13, 14, Rohrmuffen 15 zum koaxialen Fixieren der Innenrohre 13 in den Außenrohren 14 sowie Fittings 16, 17 zum Verbinden von zwei jeweils aus einem Innen- und einem Außenrohr 13, 14 bestehenden Doppelrohren 18, 18, wobei die Rohrmuffen 15 der Doppelrohre 18 durch Steckverbindungen mit den Fittings 16, 17 unlösbar verbindbar sind.

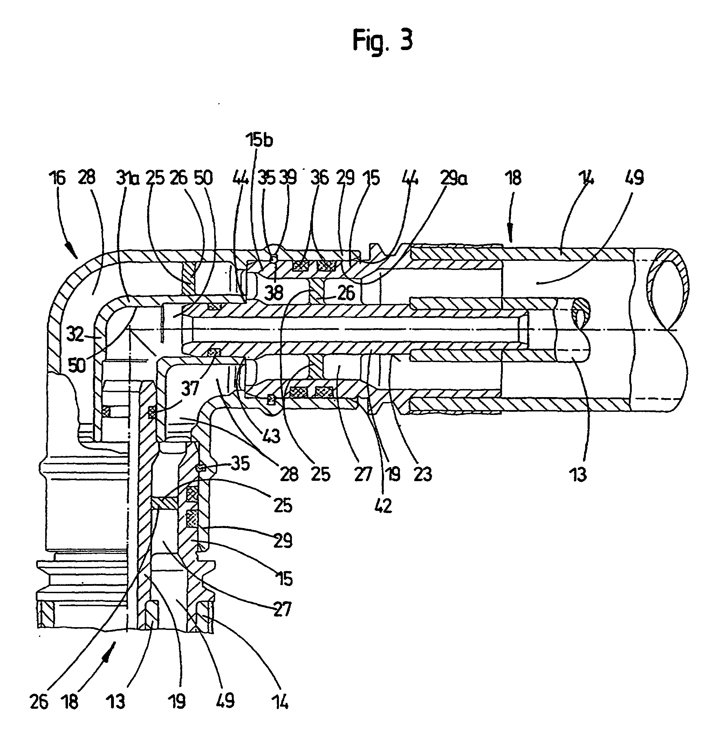

Die Rohrmuffe 15 gemäß Fig. 2 weist ein Ende 15a zum unlösbaren Befestigen eines Außenrohres 14 und ein Ende 15b zum unlösbaren Einstecken in ein Fitting 16, 17 gemäß den Fign. 3 bis 5 sowie ein Rohrstück 19 zum Anschließen des Innenrohres 13 eines Doppelrohres 18 auf, wobei das Rohrstück 19 einen gegenüber dem Rohrmuffen-Innendurchmesser 20 kleineren Außendurchmesser 21 besitzt. Das koaxial zur Rohrmuffenachse 22-22 angeordnete Rohrstück 19 ist durch zwischen dessen Außenmantel 23 und dem Innenmantel 24 der Rohrmuffe 15 verlaufende Verbindungsstege 25 gehalten, die Durchtrittsöffnungen 26 für ein flüssiges Medium wie Wasser bilden, das durch den von dem Innenmantel 24 der Rohrmuffe 15 und dem Außenmantel 23 des Rohrstückes 19 gebildeten Ringkanal 27 strömt. Die beiden Enden 19a, 19b des Rohrstücks 19 stehen über die Enden 15a, 15b der Rohrmuffe 15 vor.

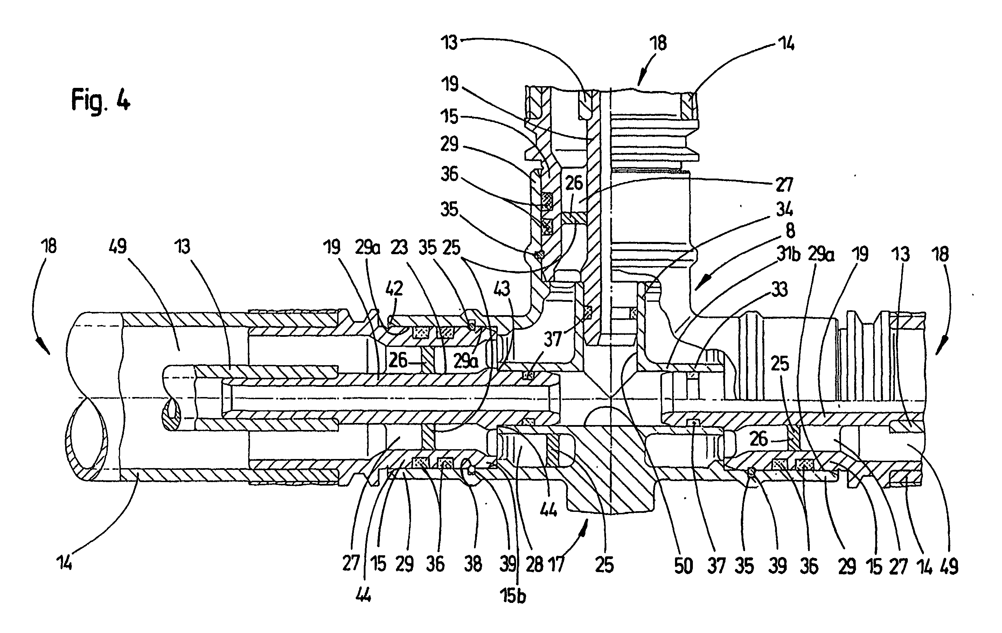

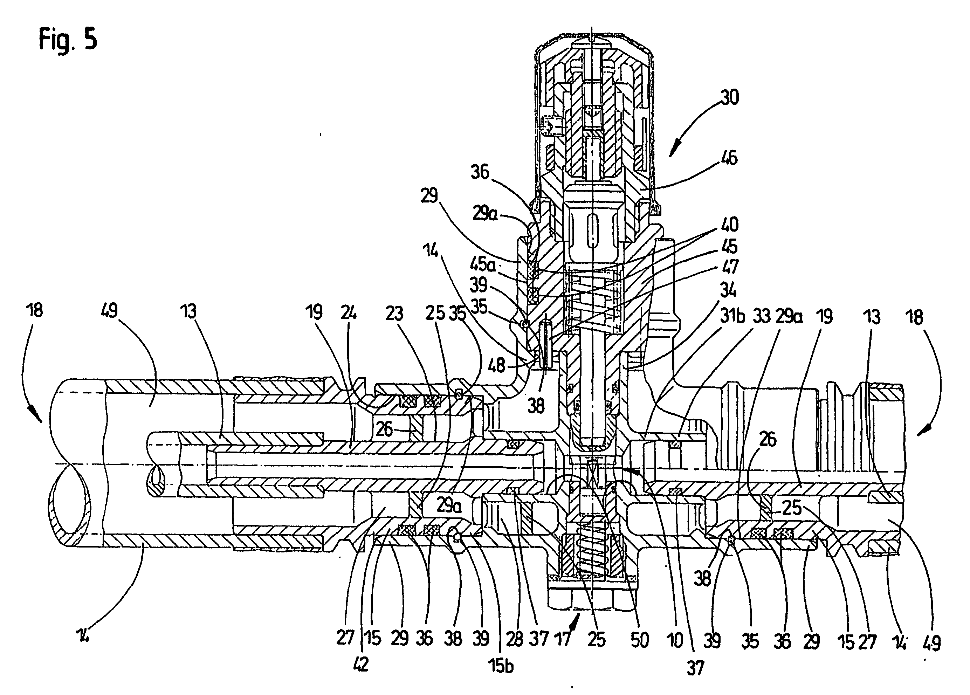

In der Durchgangsbohrung 28 des als Bogenstück ausgebildeten Fittings 16 nach Fig. 3 zur Verbindung zweier rechtwinklig zueinander verlegter Doppelrohre 18, 18 sowie der Fittings 17 in Form von T-Stücken mit einem Anschlußstutzen 29 für ein Abzweig-Doppelrohr 18 bzw. eine Armatur 30, z.B. ein Regulierventil 10, nach den Fign. 4 und 5 ist ein jeweils zu der Durchgangsbohrung 28 koaxial verlaufendes, gebogenes bzw. gerade Rohrstück 31a bzw. 31b angeordnet.

Das gebogene Rohrstück 31a in dem als Rohrbogen ausgebildeten Fitting 16 nach Fig. 3 besitzt einen geschlossenen Rohrmantel 32, während das als T-Stück ausführte Rohrstück 31b in dem Fitting 17 in Form eines T-Stücks nach den Fign. 4 und 5 einen Rohrmantel 33 mit einem Anschlußstutzen 34 zum Einsetzen eines Doppelrohres 18 einer Rohrabzweigung 8 oder zum Einsetzen einer Armatur 30 besitzt. Die Rohrstücke 31a, 31b, die kürzer als die Durchgangsbohrungen 28 der Fittings 16, 17 bemessen sind, sind durch zwischen ihrem Rohrmantel 32, 33 und der Wandung der Durchgangsbohrung 28 der Fittings 16, 17 verlaufende Verbindungsstege 25 gehalten, die Durchtrittsöffnungen 26 für das durch die Durchgangsbohrung 28 des Fittings 16, 17 strömende Medium bilden.

Die Rohrmuffen 15 der Doppelrohre 18 sind mit den Fittings 16, 17 durch eine Steckverbindung unlösbar miteinander verrastbar, wobei das Einsteckende 15b einer Rohrmuffe 15 und der dieses aufnehmende Anschlußstutzen 29 eines Fittings 16, 17 durch einen Sprengring 35 gegeneinander verriegelbar und durch Dichtringe 36 gegeneinander abdichtbar sind und die ineinander steckbaren Rohrstücke 19; 31a, 31b der Rohrmuffen 15 und der Fittings 16, 17 jeweils durch einen Dichtring 37 gegeneinander abdichtbar sind.

Der in eine Ringnut 38 im Außenmantel 15c des Einsteckendes 15b einer Rohrmuffe 15 eines Doppelrohres 18 eingelegte Sprengring 35 rastet beim Einstecken der Rohrmuffe 15 in einen Anschlußstutzen 29 eines Fittings 16, 17 in eine entsprechende in der Innenwand 29a des Anschlußstutzens 29 eingelassene Ringnut 39 ein.

Die Dichtringe 36 zur Abdichtung der Rohrmuffe 15 eines Doppelrohres 8 gegen die Innenwand 29a eines Anschlußstutzens 29 eines Fittings 16, 17 werden in zwei axial beabstandete Ringnuten 40 im Einsteckende 15b der Rohrmuffe 15 eingelegt.

Der Dichtring 37 zur Abdichtung des in die Durchgangsbohrung 50 der Rohrstücke 31a, 31b der Fittings 16, 17 eingesteckten Rohrstücks 19 der Rohrmuffe 15 eines Doppelrohres 18 ist jeweils in eine Ringnut 41 im Einsteckende 19b des Rohrstücks 19 der Rohrmuffen 15 eingelegt.

Die Einsteckenden 15b, 19b der Rohrmuffen 15 der Doppelrohre 18 und der Rohrstücke 19 der Rohrmuffen 15 sowie die Einstecköffnungen 42, 43 der Anschlußstutzen 29 der Fittings 16, 17 und von deren Rohrstücken 31a, 31b weisen angefaste Kanten 44 als Einsteckhilfe auf.

Die in Einsteckrichtung der Rohrmuffen 15 hintere Flanke 38a der Ringnut 38 zur Aufnahme des Sprengringes 35 ist zur Erleichterung des Einsteckens der Rohrmuffen ebenfalls angefast.

Fig. 5 zeigt ein als T-Stück ausgebildetes Fitting 17 mit zwei Doppelrohren 18, 18, die in die beiden in Richtung der Durchgangsbohrung 28 gegenüberliegenden Anschlußstutzen 29 mittels der Rohrmuffen 15 eingesteckt sind. In den quer zur Durchgangsbohrung 28 gerichteten dritten Anschlußstutzen 29 des Fittings 17 ist ein einer Rohrmuffe 15 entsprechendes Einsatzstück 45 unlösbar eingesteckt, in das das Oberteil 46 eines Regulierventils 10 eingeschraubt ist. Das eingesteckte Einsatzstück 45 ist mittels eines Sprengringes 35 mit dem Anschlußstutzen 29 des Fittings 17 verriegelt, wobei der in eine Ringnut 38 im Einsatzstück 45 eingesetzte Sprengring 35 in eine entsprechende Ringnut 39 in der Innenwand 29a des Anschlußstutzens 29 eingreift. Das Einsatzstück 45 ist mittels zweier, in entsprechende Ringnuten 40 in dessen Außenmantel 45a eingelegter, axial beabstandeter Dichtringe 36 in dem Anschlußstutzen 29 des Fittings 17 abgedichtet. Das in dem Anschlußstutzen 29 des Fittings 17 durch den Sprengring 35 gegen Herausziehen gesicherte Einsatzstück 45 zur Aufnahme des Oberteils 46 des Regulierventils 10 ist zusätzlich durch einen in das Einsatzstück eingesetzten Splint 47 gegen Verdrehen gesichert, der in eine entsprechende Öffnung 48 in dem Anschlußstutzen 29 eingreift.

Bei der Installierung eines Warmwasserkreislaufs gemäß Fig. 1 für die Warmwasserversorgung eines Gebäudes mit dem vorbeschriebenen Rohrsystem dient der von den in Rohrsträngen verlegten Doppelrohren 18, den Rohrmuffen 15 und den verschiedenen Fittings 16, 17 gebildete Ringkanal 49 als Warmwasser-Zuleitung 3 zu den verschiedenen Zapfstellen 6, und die Innenrohre 13 sowie die Rohrstücke 19 der Rohrmuffen 15 der Doppelrohre 18 bilden zusammen mit den Rohrstücken 31a, 31b der verschiedenen Fittings 16, 17 die Zirkulationsleitung 7. Mit dem neuen Rohrsystem entfällt somit die herkömmliche Parallelverlegung von Zirkulationsleitungen zu den Warmwasser-Zuleitungen bei der Installierung von Warmwasserkreisläufen.

## Patentansprüche

1. Rohrsystem für flüssige Medien, insbesondere für in Gebäuden verlegte Warmwasserkreise zur Brauchwasserversorgung mit einem Warmwassererzeuger (1), einer von diesem zu Zapfstellen (6) führenden Zuleitung (3), einer von dieser abzweigenden, zum Warmwassererzeuger (1) zurückführenden Zirkulationsleitung (7) sowie einer das warme Wasser im Kreislauf umpumpenden Wasserpumpe (11), wobei das Rohrsystem Innen- und Außenrohre (13, 14), Rohrmuffen (15) zum koaxialen Fixieren der Innenrohre (13) in den Außenrohren (14) sowie Fittings zum Verbinden von mindestens zwei jeweils aus einem Innen- und einem Außenrohr (13,14) bestehenden Doppelrohren (18) umfaßt, **dadurch gekennzeichnet, daß** die Rohrmuffen (15) der Doppelrohre (18) durch Steckverbindungen mit Fittings (16,17) unlösbar verbindbar sind, die als Durchgangsfittings in Form von geraden Rohrstücken, T-Stücken oder Rohrbögen ausgebildet sind, die Rohrmuffen (15) ein Ende (15a) zum unlösbaren Befestigen eines Außenrohres (14) und ein Ende (15b) zum unlösbaren Einstecken in ein Fitting (16, 17) sowie ein Rohrstück (19) zum Anschließen des Innenrohres (13) eines Doppelrohres (18) aufweisen, wobei das Rohrstück (19) einen gegenüber dem Rohrmuffen-Innendurchmesser (20) kleineren Außendurchmesser (21) besitzt, das koaxial zur Rohrmuffenachse (22-22) angeordnete Rohrstück (19) durch zwischen dessen Außenmantel (23) und dem Innenmantel (24) der Rohrmuffe (15) verlaufende Verbindungsstege (25) gehalten ist, die Durchtrittsöffnungen (26) für ein flüssiges Medium wie Wasser bilden, das durch den von dem Innenmantel (24) der Rohrmuffe (15) und dem Außenmantel (23) des Rohrstückes (19) gebildeten Ringkanal (27) strömt, die beiden Enden (19a, 19b) des Rohrstückes (19) über die Enden (15a, 15b) der Rohrmuffe (15) vorstehen, ferner daß in der Durchgangsbohrung (28) der Fittings (16, 17) jeweils ein koaxial zu dieser verlaufendes Rohrstück (31a, 31b) angeordnet ist, das einen geschlossenen Rohrmantel (32) oder einen Rohrmantel (33) mit mindestens einem Anschlußstutzen (34) für ein Doppelrohr (18) einer Rohrabzweigung (8) oder eine Armatur (30) aufweist und das durch zwischen seinem Rohrmantel (32, 33) und der Wandung der Durchgangsbohrung (28) des Fittings (16, 17) verlaufende Verbindungsstege (25) gehalten ist, die Durchtrittsöffnungen (26) für das durch die Durchgangsbohrung (28) des Fittings (16, 17) strömende flüssige Medium bilden, die Rohrstücke (31a, 31b) kürzer als die Durchgangsöffnung (28) der Fittings (16, 17) bemessen sind und daß das Einsteckende (15b) einer Rohrmuffe (15) und der dieses aufnehmende Anschlußstutzen (29) eines Fittings (16, 17) durch mindestens ein Rastelement, beispielsweise einen Sprengring (35), miteinander verbunden und durch Dichtelemente wie Dichtringe (36) gegeneinander abgedichtet sind und die ineinander steckbaren Rohrstücke (19; 31a, 31b) der Rohrmuffen (15) und der Fittings (16, 17) durch Dichtelemente wie Dichtringe (37) gegeneinander abgedichtet sind.

2. Rohrsystem nach Anspruch 1, **gekennzeichnet durch** ein in einen Anschlußstutzen (29) eines Fittings (17) einsteckbares, einer Rohrmuffe (15) entsprechendes Einsatzstück (45) zur Aufnahme des Oberteils (46) einer Armatur (30).

3. Rohrsystem nach Anspruch 1 oder 2, **dadurch gekennzeichnet, daß** in den Außenmantel (15c) einer Rohrmuffe (15) am Einsteckende (15b) derselben oder in den Außenmantel (45a) eines in einen Anschlußstutzen (29) eines Fittings (17) eingesteckten Einsatzstückes (45) zur Aufnahme des Oberteils (46) einer Armatur (30) axial beabstandete Ringnuten (40) zur Aufnahme von Dichtringen (36) zur Abdichtung der Rohrmuffe (15) oder des Einsatzstückes (45) gegen die Innenwand (29a) des jeweiligen Anschlußstutzens (29) des Fittings (16, 17) sowie eine weitere Ringnut (38) zur Aufnahme jeweils eines Sprengringes (35) eingelassen sind, der in eine entsprechende Ringnut (39) in der Innenwand (29a) des Anschlußstutzens (29) des Fittings (16, 17) für die Rohrmuffe (15) oder eine entsprechende Ringnut (39) in der Innenwand (29a) des Anschlußstutzens (29) des Fittings (17) für das Einsatzstück (45) einrastet.

4. Rohrsystem nach einem der Ansprüche 1 bis 3, **dadurch gekennzeichnet, daß** die zusammengesteckten inneren Rohrstücke (19; 31a, 31b) einer Rohrmuffe (15) und eines Fittings (16, 17) durch mindestens einen Dichtring (37) gegeneinander abgedichtet sind, der in eine Ringnut (41) im Einsteckende (19b) des Rohrstückes (19) der Rohrmuffe (15) eingelegt ist.

5. Rohrsystem nach einem der Ansprüche 1 bis 4, **dadurch gekennzeichnet, daß** die Einsteckenden (15b, 19b) der Rohrmuffen (15) der Doppelrohre (18) und der Rohrstücke (19) der Rohrmuffen (15) angefaste Kanten (44) als Einführhilfe aufweisen.

6. Rohrsystem nach einem der Ansprüche 1 bis 5, **dadurch gekennzeichnet, daß** die Einstecköffnungen (42, 43) der Fittings (16, 17) und der Rohrstücke (31a, 31b) derselben angefaste Kanten (44) als Einführhilfe aufweisen.

7. Rohrsystem nach einem der Ansprüche 1 bis 6, **dadurch gekennzeichnet, daß** die in Einsteckrichtung der Rohrmuffe (15) oder des Oberteils (46) einer Armatur (30) hintere Flanke (38a) der Ringnut (38) zur Aufnahme eines Sprengringes (35) angefast ist.

## Claims

1. Pipe system for liquids especially for hot water circuits installed in buildings for delivering warm water for usage, comprising a boiler (1), a feed pipe (3) leading therefrom to discharge points, a circulation pipe (7) branching therefrom and leading back to the boiler (1) and a water pump (11) circulating the hot water in the circuit, wherein the pipe system includes internal and external pipes (13, 14), pipe sockets (15) for coaxially fixing the internal pipes (13) in the external pipes (14) and fittings for connecting at least two twin pipes (18) each consisting of an internal and an external pipe (13, 14), **characterized in that** the pipe sockets (15) of the twin pipes (18) are undetachably connectable by plug connections with fittings (16, 17) formed as through fittings in the form of straight pipe portions, tees or bends, the pipe sockets (15) having one end (15a) for undetachably fixing the external pipe (14) and another end (15b) for undetachably plugging into a fitting (16, 17) and a pipe portion (19) for connecting the internal pipe (13) of a twin pipe (18), the pipe portion (19) having a smaller outer diameter (21) than the pipe socket inner diameter (20), the pipe portion (19) arranged coaxially to the pipe socket axis (22-22) being supported by connecting webs (25) extending between its outer jacket (23) and the inner jacket (24) of the pipe socket (15) which form through openings (26) for a liquid medium as water which flows through the annular channel (27) formed by the inner jacket (24) of the pipe socket (15) and the outer jacket (23) of the pipe portion (19), the two ends (19a, 19b) of the pipe portion (19) protruding beyond the ends (15a, 15b) of the pipe socket, further **in that** in each through bore (28) of the fittings (16, 17) there is provided a pipe portion (31a, 31b) extending coaxially with the through bore (28), the pipe portion (31a, 31b) having a closed pipe jacket (32) or a pipe jacket (33) with at least one connecting socket (34) for a twin pipe (18) of a pipe branch (8) or an armature (30) and which is supported by connecting webs (25) extending between its pipe jacket (32, 33) and the wall of the through bore (28) of the fitting (16, 17), the connecting webs (25) providing through openings (26) for the liquid medium flowing through the through bore (28) of the fitting (16, 17), the pipe portions (31a, 31b) being shorter than the through bore (28) of the fitting, and **in that** the plugging end (15b) of a pipe socket (15) and the connecting socket (29) of a fitting (16, 17) receiving this end are connected with one another and sealed from one another by sealing elements like sealing rings (36) and the plugging-in pipe portions (19; 31a, 31b) of the pipe socket (15) and of the fittings (16, 17) are sealed from another by sealing elements like sealing rings (37).

2. Pipe system as claimed in claim 1, **characterised by** an insert (45) insertable into a connecting socket (29) of a fitting (17) and corresponding to a pipe socket (15), for receiving the upper part (46) of an armature (30).

3. Pipe system as claimed in claim 1 or 2, **characterised in that** in the outer jacket (15c) of a pipe socket (15) at the plugging-in end (15b) thereof or in the outer jacket (45a) of a plugging-in piece (45) plugging into a connecting socket (29) of a fitting (17) and adapted to receiving the upper part (46) of an armature (30) there are provided axially spaced annular grooves (40) for receiving sealing rings (36) for sealing the pipe socket (15) or the insert (45) against the inner wall (29a) of the respective connecting socket (29) of the fitting (16, 17) and a further annular groove (38) for receiving, respectively, a circlip (35), which snaps into a respective annular groove (39) in the inner wall (29a) of the connecting socket (29) of the fitting (16, 17) for the pipe socket (15) or snaps into a corresponding annular groove (39) in the inner wall (29a) of the connecting socket (29) of the fitting (17) for the insert (45).

4. Pipe system as claimed in any of claims 1 to 3, **characterised in that** the plugged-in internal pipe portions (19; 31a, 31b) of a pipe socket (15) and of a fitting (16, 17) are sealed from one another by at least one sealing ring (37) inserted in an annular groove (41) in the plugging-in end (19b) of the pipe portion (19) of the pipe socket (15).

5. Pipe system as claimed in any of claims 1 to 4, **characterised in that** the plugging-in ends (15b, 19b) of the pipe sockets (15) of the twin pipes (18) and of the pipe portions (19) of the pipe sockets (15) have chamfered edges (44) as an aid for insertion.

6. Pipe system as claimed in any of claims 1 to 5, **characterised in that** the plugging-in openings (42, 43) of the fittings (16, 17) and of the pipe portions (31a, 31b) thereof have chamfered edges as an aid for insertion.

7. Pipe system as claimed in any of claims 1 to 6, **characterised in that** the trailing flank (38a) of the annular groove (38) in the direction of plugging-in of the pipe socket (15) or of the upper part (46) of an armature (30) is chamfered for receiving a circlip (35).

## Revendications

1. Système de tuyaux pour fluides liquides, notamment pour des circuits d'eau chaude posés dans des bâtiments, pour l'alimentation en eau chaude sanitaire, comportant un générateur (1) d'eau chaude, une conduite (3) d'amenée menant de ce générateur à des points (6) de soutirage, une conduite (7) de circulation bifurquant de cette conduite (3) et retournant au générateur (1) d'eau chaude, ainsi qu'une pompe (11) à eau faisant circuler l'eau chaude en circuit fermé, le système de tuyaux comprenant des tuyaux (13, 14) intérieurs et extérieurs, des manchons (15) tubulaires pour l'immobilisation coaxiale des tuyaux (13) intérieurs dans les tuyaux (14) extérieurs, ainsi que des raccords pour l'assemblage d'au moins deux tuyaux (18) doubles constitués chacun d'un tuyau (13) intérieur et d'un tuyau (14) extérieur, **caractérisé en ce que** les manchons (15) tubulaires des tuyaux (18) doubles sont assemblés de manière inamovible, par des assemblages à emboîtement, à des raccords (16, 17) qui sont conçus comme raccords traversants sous la forme d'éléments tubulaires rectilignes, d'éléments en T ou de coudes de tuyau, les manchons (15) tubulaires comportant une extrémité (15a) pour la fixation inamovible d'un tuyau (14) extérieur et une extrémité (15b) pour l'emboîtement inamovible dans un raccord (16, 17), ainsi qu'un élément (19) tubulaire pour le raccordement du tuyau (13) intérieur d'un tuyau (18) double, l'élément (19) tubulaire possédant un diamètre (21) extérieur inférieur au diamètre (20) intérieur du manchon tubulaire, l'élément (19) tubulaire, disposé coaxialement à l'axe (22-22) du manchon tubulaire, étant maintenu par des nervures (25) de liaison s'étendant entre l'enveloppe (23) extérieure dudit élément et l'enveloppe (24) intérieure du manchon (15) tubulaire, nervures qui forment des ouvertures (26) de passage pour un fluide liquide, comme de l'eau, qui s'écoule dans le canal (27) annulaire formé par la surface latérale (24) intérieure du manchon (15) tubulaire et par la surface latérale (23) extérieure de l'élément (19) tubulaire, les deux extrémités (19a, 19b) de l'élément (19) tubulaire dépassant des extrémités (15a, 15b) du manchon (15) tubulaire, **en ce que**, en outre, il est disposé dans le perçage (28) traversant des raccords (16, 17) un élément (31 a, 31 b) tubulaire respectif s'étendant coaxialement à ce perçage, élément qui comporte une surface latérale (32) tubulaire fermée ou une surface latérale (33) tubulaire dotée d'au moins une tubulure (34) de raccordement pour un tuyau (18) double d'une bifurcation (8) de tuyau, ou pour un appareil (30) de robinetterie, et qui est maintenu par des nervures (25) de liaison s'étendant entre sa surface latérale (32, 33) tubulaire et la paroi du perçage (28) traversant du raccord (16, 17), nervures qui forment des ouvertures (26) de passage pour le fluide liquide s'écoulant dans le perçage (28) traversant du raccord (16, 17), les éléments (31a, 31 b) tubulaires étant conçus plus courts que l'ouverture (28) débouchante des raccords (16, 17), et **en ce que** l'extrémité (15b) d'emboîtement d'un manchon (15) tubulaire, et la tubulure (29) de raccordement d'un raccord (16, 17) qui la reçoit, sont mutuellement assemblées par au moins un élément d'encliquetage, par exemple un jonc (35) d'arrêt, et sont rendues étanches l'une par rapport à l'autre par des éléments d'étanchéité comme des joints (36) d'étanchéité annulaires, et les éléments (19 ; 31 a, 31 b) tubulaires mutuellement emboîtables des manchons (15) tubulaires et des raccords (16, 17) étant rendus étanches les uns par rapport aux autres par des éléments d'étanchéité comme des joints (37) d'étanchéité annulaires.

2. Système de tuyaux suivant la revendication 1, **caractérisé par** une pièce (45) d'insertion, pouvant être emboîtée dans une tubulure (29) de raccordement d'un raccord (17) et correspondant à un manchon (15) tubulaire, pour recevoir la partie (46) supérieure d'un appareil (30) de robinetterie.

3. Système de tuyaux suivant la revendication 1 ou 2, **caractérisé en ce que**, dans la surface latérale (15c) extérieure d'un manchon (15b) tubulaire, à l'extrémité (15b) d'emboîtement de ce manchon, ou dans la surface latérale (45a) extérieure d'une pièce (45) d'insertion emboîtée dans une tubulure (29) de raccordement d'un raccord (17) et destinée à recevoir la partie (46) supérieure d'un appareil (30) de robinetterie, des rainures (40) annulaires axialement distantes sont ménagées pour recevoir des joints (36) d'étanchéité annulaires pour l'étanchéité du manchon (15) tubulaire ou de la pièce (45) d'insertion vis-à-vis de la paroi (29a) intérieure de la tubulure (29) de raccordement respective du raccord (16, 17), ainsi qu'une autre rainure (38) annulaire pour recevoir un jonc (35) d'arrêt respectif, qui s'encliquète dans une rainure (39) annulaire correspondante dans la paroi (29a) intérieure de la tubulure (29) de raccordement du raccord (16, 17) pour le manchon (15) tubulaire, ou dans une rainure (39) annulaire correspondante dans la paroi (29a) intérieure de la tubulure (29) de raccordement du raccord (17) pour la pièce (45) d'insertion.

4. Système de tuyaux suivant l'une des revendications 1 à 3, **caractérisé en ce que** les éléments (19; 31a, 31b) tubulaires intérieurs mutuellement emboîtés d'un manchon (15) tubulaire et d'un raccord (16, 17) sont rendus mutuellement étanches par au moins un joint (37) d'étanchéité annulaire, qui est logé dans une rainure (41) annulaire dans l'extrémité (19b) d'emboîtement de l'élément (19) tubulaire du manchon (15) tubulaire.

5. Système de tuyaux suivant l'une des revendications 1 à 4, **caractérisé en ce que** les extrémités (15b, 19b) d'emboîtement des manchons (15) tubulaires des tuyaux (18) doubles et des éléments (19) tubulaires des manchons (15) tubulaires comportent des arêtes (44) chanfreinées pour faciliter l'introduction.

6. Système de tuyaux suivant l'une des revendications 1 à 5, **caractérisé en ce que** les ouvertures (42, 43) d'emboîtement des raccords (16, 17) et des éléments (31a, 31b) tubulaires de ces raccords comportent des arêtes (44) chanfreinées pour faciliter l'introduction.

7. Système de tuyaux suivant l'une des revendications 1 à 6, **caractérisé en ce que** le flanc (38a) arrière - dans la direction d'emboîtement du manchon (15) tubulaire ou de la partie (46) supérieure d'un appareil (30) de robinetterie - de la rainure (38) annulaire destinée à recevoir un jonc (35) d'arrêt est chanfreiné.
